# EUROPEAN PATENT SPECIFICATION

(11) **EP 3 290 892 B1**
(45) Date of publication and mention of the grant of the patent: **31.03.2021**
(21) Application number: 17188491.9
(22) Date of filing: 30.08.2017
(51) Int. Cl.: G01M 11/02

(54) **LENS MEASUREMENT DEVICE**
LINSENMESSVORRICHTUNG
DISPOSITIF DE MESURE DE LENTILLE

(30) Priority: 30.08.2016 JP 2016167996; 28.07.2017 JP 2017146366
(43) Date of publication of application: 07.03.2018
(73) Proprietor: NIDEK CO., LTD, Gamagori Aichi (JP)
(72) Inventor: MATSUMOTO, Toshiro, Gamagori, Aichi (JP)
(74) Representative: Hoefer & Partner Patentanwälte mbB

(56) References cited:
- EP-A1- 1 997 585
- US-A- 5 910 836
- US-A- 5 973 772
- US-A1- 2007 121 100
- US-B2- 6 950 180

## Description

### TECHNICAL FIELD

The present disclosure relates to a lens measurement device that measures an optical characteristic of a lens and an index plate for the lens measurement device that measures the optical characteristic of the lens.

### BACKGROUND

As a lens measurement device, a lens meter that includes a measurement optical system projecting a measurement light flux on a lens and capturing the measurement light flux passing through the lens and an index plate by an image-capturing element to measure an optical characteristic of a lens (for example, a refraction degree or the like) is known (for example, see JP-A-2008-241694). A device that projects a measurement light flux on a lens and projects the measurement light flux passing through the lens and an index plate on a screen, and captures the measurement light flux projected on the screen by an image-capturing element to acquire an optical characteristic of the lens and lens information (for example, appearance information of a lens, information of a small sphere shape of a lens, print mark information of a lens, concealed mark information of a lens, information of printing point formed on the lens, shape information of a hole opened in a lens, position information of the hole opened in the lens or the like) different from the optical characteristic and determine an attachment position of a cup used for processing of the lens is known (for example, see JP-A-2000-079545).

Other lens measurement devices are known from US 5 910 836 A, from US 5 973 772 A, from US 6 950 180 B2, and from US 2007/121100 A1.

### SUMMARY

In a case where an optical characteristic of a lens and lens information different from the optical characteristic are acquired by the lens measurement device, in measurement light fluxes passing through a lens and an index plate, a measurement light flux (lens image) which does not pass through the index plate and a measurement light flux (index pattern image) passing through an index plate portion provided for optical characteristic measurement of the lens are captured. For that reason, when lens information different from the optical characteristic is acquired from the lens image, the index pattern image becomes an obstacle and it becomes difficult to accurately acquire lens information different from the optical characteristic.

In order to cope with this, although a configuration in which an optical system for an optical characteristic of a lens and an optical system for lens information different from the optical characteristic are respectively provided is taken into consideration, there is a problem that a device for which various members are needed becomes complex or becomes enlarged.

A technical problem to be solved of the present disclosure is to provide a lens measurement device that can accurately acquire an optical characteristic of a lens and lens information with a simple configuration by considering at least one of the problems described above.

### BRIEF DESCRIPTION OF THE DRAWINGS

Fig. 1 is a schematic diagram of an appearance of a cup attachment device.
Figs. 2A and 2B are diagrams showing a schematic configuration of a lens support mechanism.
Fig. 3 is a diagram of a schematic configuration of a cup attachment mechanism.
Fig. 4 is a diagram of a schematic configuration of a measurement optical system in the cup attachment device.
Figs. 5A and 5B are diagrams illustrating an example of a configuration of an index plate.
Fig. 6 is a diagram illustrating an example of a configuration of a retro-reflective member.
Fig. 7 is a diagram of a schematic configuration of a control system in the cup attachment device.
Fig. 8 is a diagram illustrating an image-capture result of a lens using a first light source.
Fig. 9 is a diagram for explaining an image of a support pin in a state where a lens is placed on the support pins.
Fig. 10 is a diagram illustrating an image-capture result of a lens using a second light source.

### DESCRIPTION OF ILLUSTRATIVE EMBODIMENT

### <Outline>

In the following, a typical embodiment according to the present invention will be described with reference to the accompanying drawings. In the present disclosure, description will be made by assuming that for a cup attachment device 1, a depth direction (front-and-rear direction) is the Z-direction, a horizontal direction (right-and-left direction) in a plane perpendicular to the depth direction is the X-direction, and a vertical direction (up-and-down direction) in the plane perpendicular to the depth direction is the Y-direction. In the present embodiment, substantially the horizontal state includes a complete horizontal state. In the present embodiment, substantially the parallel state includes a complete parallel state. In the present embodiment, substantially the same includes a complete same state.

In the present embodiment, a lens measurement device (cup attachment device 1) measures an optical characteristic of a lens. As the lens measurement device, a device may be available as long as the device includes measurement optical system measuring a lens and is able to measure the lens. As the lens measurement device, a lens meter, a cup attachment device, or the like may be available.

In the present embodiment, the lens measurement device includes a first light source 41a, a second light source 41b, an index plate 44, a first image-capturing element 48, a second image-capturing element 48, an acquisition means 60, or the like. Also, the lens measurement device is not limited to the configuration described above.

The first light source irradiates a lens with a light flux having a first wavelength. The second light source irradiates the lens with a light flux having a second wavelength different from the first wavelength. A configuration in which the first light source and the second light source are provided respectively and separately may be available. The first light source and the second light source may be used in common. In this case, it may be configured to include irradiation control means. In the second light source, as the light flux having the second wavelength different from the first wavelength, a light flux having a wavelength of which at least one of a peak of the wavelength and a wavelength band is different from the first wavelength may be available. The irradiation control means switches irradiation of the light flux having the first wavelength by the first light source and irradiation of the light flux having the second wavelength by the second light source. The first light source and the second light source are used in common and the light flux having the first wavelength and the light flux having the second wavelength are switched and irradiated from the commonly used light source such that the optical characteristic of the lens and lens information can be acquired by switching of a single light source. With this, it is possible to acquire the optical characteristic of the lens and lens information with a simpler configuration. It is possible to reduce the number of members required for acquisition of the optical characteristic of the lens and lens information and thus, miniaturization of a device can be achieved.

The index plate that includes a light transmitting part 44a which allows the light flux having the first wavelength and the light flux having the second wavelength to pass through and a light blocking part 44b which shields an area different from the light transmitting part by blocking the light flux having the first wavelength and transmitting the light flux having the second wavelength.

The light transmitting part may have a configuration in which at least a portion of the light flux having the first wavelength and the light flux having the second wavelength is blocked. That is, the light transmitting part is not limited to a configuration in which the light flux having the first wavelength and the light flux having the second wavelength are completely transmitted. In this case, the light transmitting part may have a configuration in which an amount of light fluxes having the first wavelength allowed to pass through by the light transmitting part is greater than an amount of light fluxes having the first wavelength allowed to pass through by the light blocking part. In this case, the light transmitting part may have a configuration in which an amount of light fluxes of the second wavelength allowed to pass through by the light transmitting part is less than an amount of light fluxes of the second wavelength allowed to pass through by the light blocking part.

The light blocking part may block at least a portion of the light fluxes of the second wavelength. In this case, the light blocking part may be a light blocking part by which an amount of the light fluxes of the second wavelength to be blocked is less than an amount of the light fluxes having the first wavelength to be blocked. The light blocking part preferably has a configuration in which more light fluxes having the first wavelength can be blocked. The light blocking part, more preferably, has a configuration in which the light fluxes having the first wavelength can be completely blocked.

That is, the light transmitting part may have a configuration in which the light flux having the first wavelength and the light flux having the second wavelength more than those in the light blocking part are allowed to pass through. The light blocking part may have a configuration in which more light fluxes of the second wavelength than the light fluxes having the first wavelength are allowed to pass through.

At least one of the light transmitting part and the light blocking part may be formed in such a way that a thin film is formed on a base member of the index plate by coating treatment. As coating treatment, a technique such as deposition, immersion, or painting can be used. The light transmitting part and the light blocking part are formed by coating in the index plate such that the light blocking part and the light transmitting part can be easily provided on the index plate. That is, it is possible to easily manufacture the index plate including the light transmitting part and the light blocking part.

At least one of the light transmitting part and the light blocking part may be formed on a base member of the index plate by performing various printing (for example, silk printing or the like). In the present embodiment, a configuration in which the light transmitting part and the light blocking part are formed by opening a through hole in the base member of the index plate may be adopted. In this case, the through hole is opened in in the base member of the index plate using a member which blocks the light flux having the first wavelength and through which the light flux having the second wavelength passes is used as the base member of the index plate. Thus, when irradiation is made by the first light source, the light flux having the first wavelength passes through only the through hole and thus, the index pattern image of the lens can be acquired. When irradiation is made by the second light source, the light flux having the second wavelength passes through both the base member of the index plate and the through hole and thus, the lens image can be acquired.

The light transmitting part is formed in a pattern shape. As the pattern, the light transmitting part may be formed in a pattern of a grid shape. As the pattern, the light transmitting part may be formed at irregular intervals and may be formed in a radial shape.

The first image-capturing element captures an index pattern image by the light flux having the first wavelength via the lens and the index plate. The second image-capturing element captures a lens image by the light flux having the second wavelength via the lens and the index plate. The first image-capturing element and the second image-capturing element may be used in common. The first image-capturing element and the second image-capturing element may be configured to be provided respectively and separately.

The acquisition means acquires an optical characteristic of the lens based on the index pattern image captured by the first image-capturing element and acquires lens information different from the optical characteristic of the lens based on the lens image captured by the second image-capturing element.

The optical characteristic of the lens may be a spherical power S, cylindrical power C, angle of astigmatism axis A, an amount of prism Δ, and the like. Lens information different from the optical characteristic of the lens may be appearance information of a lens, information of a small sphere shape of a lens, print mark information of a lens, concealed mark information of a lens, information of printing point formed on the lens, shape information of a hole opened in the lens, position information of the hole opened in the lens, and the like.

The lens measurement device uses the index plate that includes the light transmitting part which allows the light flux having the first wavelength and the light flux having the second wavelength to pass through and the light blocking part which shields an area different from the light transmitting part by blocking the light flux having the first wavelength and transmitting the light flux having the second wavelength. With this, it is possible to accurately acquire the optical characteristic of the lens and lens information with a simple configuration.

### <Embodiment>

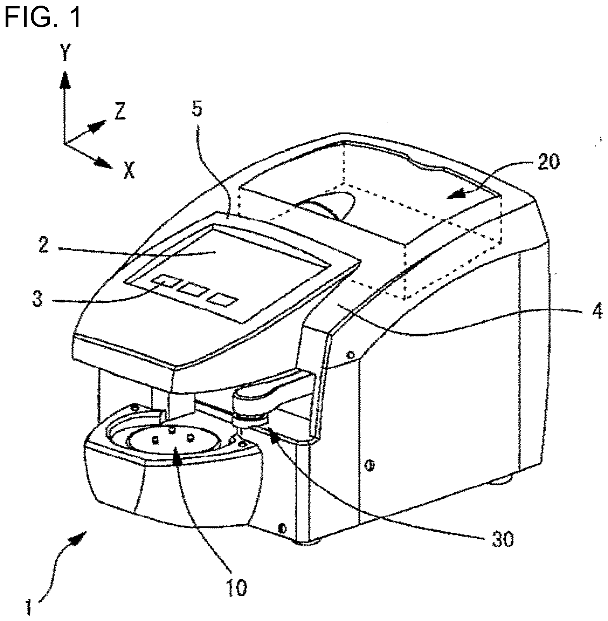

In the following, description will be made on an embodiment of the present disclosure using the drawings. Fig. 1 is a schematic diagram of an appearance of a cup attachment device 1. As the cup attachment device 1, a device may be available as long as the device includes a measurement optical system measuring a lens and can measures the lens. The cup attachment device 1 may be a lens meter that includes a measurement optical system projecting a measurement light flux on a lens and capturing the measurement light flux passing through the lens and an index plate by the image-capturing element to measure the lens. The cup attachment device 1 may be, a cup attachment device that projects a measurement light flux on the lens, projects the measurement light flux passing through the lens and the index plate on a screen, and captures the measurement light flux projected on the screen by the image-capturing element to acquire a lens measurement result and determine an attachment position of a cup used for processing of the lens. In the present embodiment, description will be made on the cup attachment device for measuring the lens and attaching a cup thereto by way of an example, as the lens measurement device.

The following paragraphs explain aspects not falling within the scope of the claims for a better understanding of the invention.

For example, the cup attachment device 1 includes a display (monitor) 2, an input switch 3, a lens support mechanism 10, a eyeglasses frame-shaped measurement unit 20, a cup attachment mechanism 30, and the like. In the present example, a configuration of the cup attachment device 1 is not limited thereto.

For example, a liquid crystal display (LCD) is used in the display 2. In the present example, although a configuration in which the display 2 uses the LCD is described by way of an example, the display 2 is not limited thereto. For example, a configuration in which the display 2 uses an organic electro luminescence (EL) display or a plasma display may be available.

For example, the display 2 is a touch panel. That is, in the present example, the display 2 functions as an operation unit (controller). The display 2 may be a non-touch panel type display. Also, for example, as the display 2, a plurality of displays may be used jointly.

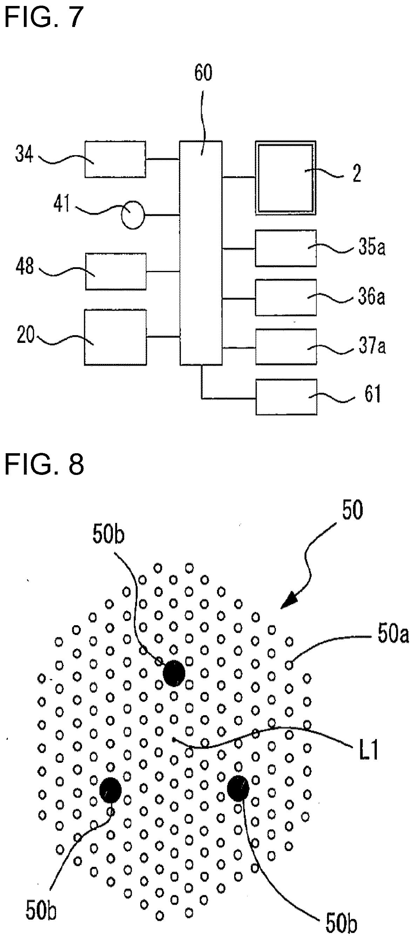

For example, the display 2 outputs a signal according to an input operation instruction to a control unit 60 which will be described later (see Fig. 7). A configuration in which the display 2 and an operation unit are separately provided may be available. For example, as the operation unit, a configuration in which at least one of a mouse, a joy stick, a keyboard, a portable terminal or the like is used is included.

For example, various pieces of information are displayed on the display 2. For example, various pieces of information are an optical characteristic of a lens (for example, spherical power S, cylindrical power C, angle of astigmatism axis A, and an amount of prism Δ), lens information different from the optical characteristic (for example, appearance information of a lens, information of a small sphere shape of a lens, print mark information of a lens, concealed mark information of a lens, information of printing point formed on the lens, shape information of a hole opened in the lens, position information of the hole opened in the lens), an appearance shape of a cup fixed to the lens, and the like.

For example, the input switch 3 is used when the cup attachment device 1 inputs a signal (for example, switching of a measurement mode, fixing of a cup to a lens, machining condition of the lens) for executing various processing. For example, in the present example, the input switch 3 is electronically displayed on a screen of the display 2. That is, for example, the input switch 3 can be operated by touching the screen of the display 2. A configuration of the input switch 3 is not limited to that of the present example. For example, the input switch 3 may be installed in a main body cover 4 or a display cover 5, or the like of the cup attachment device 1.

For example, the lens support mechanism 10 is for placing the lens thereon with the convex surface of the lens in the up direction. For example, the eyeglasses frame-shaped measurement unit 20 is used when tracing a shape of an eyeglasses frame. For example, the eyeglasses frame-shaped measurement unit 20 is used so as to make it possible to obtain a target lens shape or the like for setting the lens in the eyeglasses frame. For example, the cup attachment mechanism 30 is for fixing the cup on the front surface of the lens (firmly holding the cup on the axis). In the present example, the front surface of the lens is set as the fixing position of the cup to the lens but is not limited thereto. For example, the fixing position of the cup may be the rear surface of the lens.

Configurations of the lens support mechanism 10 and the cup attachment mechanism 30 will be described in detail later.
The configurations of the eyeglasses frame-shaped measurement unit 20 and a tracing method of the eyeglasses frame shape using the eyeglasses frame-shaped measurement unit 20 are known techniques and thus, for details thereof, please refer to JP-A-2015-007536.

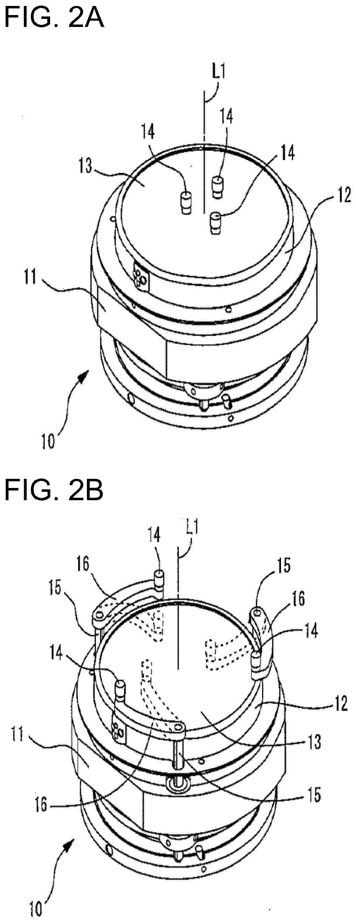

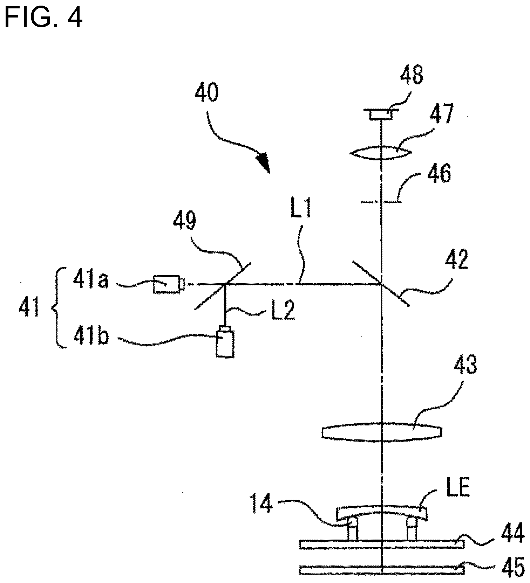

Figs. 2A and 2B are diagrams of a schematic configuration of the lens support mechanism 10. Fig. 2A is a perspective view illustrating an example of the lens support mechanism 10. Fig. 2B is a diagram illustrating a modification example of the lens support mechanism 10. For example, the lens support mechanism 10 includes a cylindrical base 11, a ring member 12, a protection cover 13, a support pin 14, and the like. For example, the lens support mechanism 10 includes an index plate 44, a retro-reflective member 45, or the like, of the measurement optical system 40, which will be described later, inside thereof (see Fig. 4). In the present example, a configuration of the lens support mechanism 10 is not limited thereto.

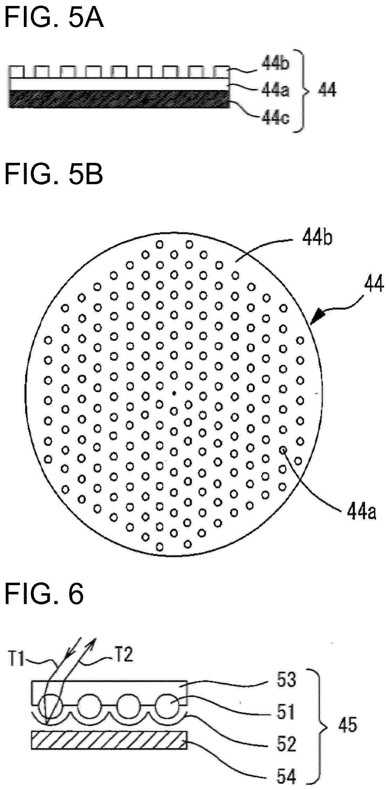

For example, the index plate 44 (see Fig. 5), the retro-reflective member 45 (see Fig. 6), or the like is accommodated inside the cylindrical base 11. For example, the protection cover 13 attached to the ring member 12 is installed above the cylindrical base 11. In the present example, the protection cover 13 and the index plate 44, which will be described later, may be used in common. For example, the support pin 14 abuts on the rear surface of the lens to hold the lens. For example, the support pin 14 is fixed on the upper surface of the index plate 44 which will be described later. For example, the support pin 14 is configured with three support pins. For example, respective support pins 14 are arranged at equal distances and at equal angles (120 degrees) with respect to an optical axis L1 of the measurement optical system 40 (see Fig. 4).

In the present example, a configuration in which the lens LE is held using the support pin 14 is described by way of an example, but is not limited thereto. For example, a configuration in which the lens LE is placed on the protection cover 13 may be available. In this case, a configuration in which the protection cover 13 and the index plate 44 are separated from each other by a predetermined distance and reference indexes having different shapes and sizes are formed in the pattern of the light transmitting parts 44a is preferable. That is, it is preferable that the lens LE and the index plate 44 are separated from each other by a predetermined distance. In the present example, the number of the support pins 14 is three, but is not limited thereto. The support pin 14 may be configured to have any number of support pins as long as the lens LE can be held.

In the present example, a configuration in which respective support pins 14 are arranged at equal distances and at equal angles with respect to an optical axis L1 of the measurement optical system 40 is adopted, but is not limited thereto. The distances from the optical axis L1 of the measurement optical system 40 to the support pins 14 and the angles therebetween may respectively differ. That is, a configuration in which an inspector sets an arbitrary distance and angle for each support pin 14 may be available. In this case, for example, the support pin 14 may be configured to hold a portion near the center of the lens LE or may be configured to hold the outer periphery of the lens LE.

In the present example, a configuration in which the support pins 14 are arranged to be fixed is described by way of an example, but is not limited thereto. For example, the support pin 14 may be a moving mechanism. That is, for example, as in Fig. 2B, a configuration in which a rotation axis 15 and an arm 16 are provided on the peripheral part of the cylindrical base 11 and the support pin 14 is attached to the tip of the arm 16 may be available. In this case, for example, a lever (not illustrated) for rotating the rotation axis 15 or the like is provided in the cup attachment device 1. For example, the inspector operates the lever (not illustrated) such that to, the rotation axis 15 is rotated and the arm 16 is rotated by being interlocked with the rotation axes 15. With this, the arm 16 is moved from the retreat position represented by the solid line to the support position represented by the dotted line and thus, it is possible to move the arrangement position of the support pin 14. The arrangement position of the support pins 14 is moved so as to make it possible to adjust a distance from the optical axis L1 of the measurement optical system 40 (see Fig. 4) to the support pins 14 and make it possible to change a size of an area in which the support pin 14 can be supported. In the above-description, a configuration in which the inspector manually operates the lever (not illustrated) to move the support pin 14 is adopted, but is not limited thereto. For example, a configuration in which the support pin 14 is automatically moved by using a rotation transmission mechanism such as a motor that transmits rotation may be available.

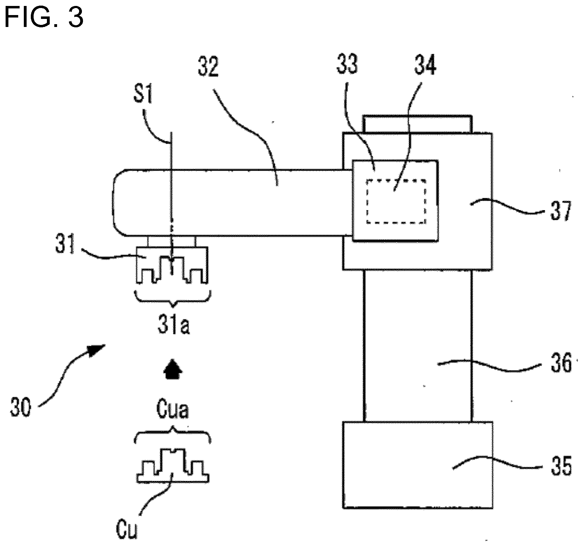

Fig. 3 is a diagram of a schematic configuration of the cup attachment mechanism 30. For example, the cup attachment mechanism 30 includes a mounting unit 31, an arm 32, an arm holding base 33, an X-direction moving mechanism 35, a Y-direction moving mechanism 36, a Z-direction moving mechanism 37, and the like. For example, the mounting unit 31 is attached to the arm 32. For example, the mounting unit 31 includes an uneven part 31a fitted in an uneven part Cua formed in a cup Cu. For example, the inspector makes the mounting unit 31 and the cup Cu abut on each other so that the uneven part 31a included in the mounting unit 31 coincides with the uneven part Cua formed in the cup Cu. With this, the mounting unit 31 can hold the cup Cu in the substantially horizontal state with respect to the ground surface of the cup attachment device 1.

For example, the arm 32 includes a rotation transmission mechanism (not illustrated) for variably holding a rotation angle of the mounting unit 31 in the horizontal direction. For example, the arm 32 is attached to the arm holding base 33. For example, the arm holding base 33 includes a motor 34. For example, rotation of the motor 34 is transmitted to the mounting unit 31 through a rotation transmission mechanism (not illustrated) included in the arm 32. That is, for example, the motor 34 is rotated such that the mounting unit 31 rotates about an attachment central axis S1 of the cup Cu. With this, it is possible to change a rotation angle of the cup Cu attached to the mounting unit 31 in the horizontal direction.

For example, the X-direction moving mechanism 35 moves in the right-and-left direction (X-direction) of the cup attachment device 1. For example, the Y-direction moving mechanism 36 is installed on the upper part of the X-direction moving mechanism 35. For example, the Y-direction moving mechanism 36 moves in the up-and-down direction (Y-direction) of the cup attachment device 1. For example, the Z-direction moving mechanism 37 is installed on the upper part of the Y-direction moving mechanism 36. For example, the Z-direction moving mechanism 37 moves in the front-and-rear direction (Z-direction) of the cup attachment device 1. For example, the Z-direction moving mechanism 37 holds the arm 32, the arm holding base 33, and the motor 34 included in the arm holding base 33. For example, in the present example, the X-direction moving mechanism 35 is moved such that the Y-direction moving mechanism 36, the Z-direction moving mechanism 37, the arm 32, and the like are moved in the right-and-left direction with respect to the cup attachment device 1. For example, the Z-direction moving mechanism 37 is moved such that the arm 32 and the like are moved in the front-and-rear direction with respect to the cup attachment device 1. With this, the mounting unit 31 held in the arm 32 is moved to the upper part of the lens support mechanism 10. Furthermore, for example, the Y-direction moving mechanism 36 is moved such that the Z-direction moving mechanism 37, the arm 32, and the like are moved in the up-and-down direction with respect to the cup attachment device 1. With this, the cup Cu abutted on the mounting unit 31 is firmly held on the front surface of the lens LE placed on the support pin 14.

In the following, further aspects of the invention which fall within the scope of the claims, are explained.

Fig. 4 is a diagram of a schematic configuration of the measurement optical system 40 in the cup attachment device 1. In the present embodiment, the cup attachment device 1 shares the measurement optical system for detecting at least the optical characteristic of the lens LE and the measurement optical system for obtaining lens information (for example, appearance information of a lens, information of a small sphere-shape of a lens, print mark information of a lens, concealed mark information of a lens, information of printing point formed on the lens, shape information of a hole opened in the lens, position information of the hole opened in the lens, or the like) different from the optical characteristic. A configuration in which the measurement optical system for detecting the optical characteristic of the lens LE and the measurement optical system for obtaining lens information different from the optical characteristic are provided respectively and separately may be available.

In the present embodiment, the measurement optical system 40 includes a light source 41, a half mirror 49, a half mirror 42, a condenser lens 43, the index plate 44, the retro-reflective member 45, a diaphragm 46, an image-capturing lens 47, the image-capturing element 48, and the like. In the present embodiment, a configuration of the measurement optical system 40 is not limited thereto. In the present embodiment, a measurement optical system is available as long as the measurement optical system includes at least the light source, the lens, the index plate, and the image-capturing element.

The diaphragm 46 is arranged at the focus position of the condenser lens 43. The diaphragm 46 has a positional relation conjugated with the light source 41 (that is, first light source 41a and second light source 41b which will be described later). For example, the image-capturing element 48 is configured with a charge coupled device (CCD). The image-capturing element 48 captures an image of the light flux irradiated from the first light source 41a which will be described later and an image of the light flux irradiated from the second light source 41b which will be described later. In the present embodiment, a configuration in which the image of the light flux irradiated from the first light source 41a and image of the light flux irradiated from the second light source 41b are captured by a single image-capturing element is described by way of an example, but is not limited thereto. The image-capturing elements may be separately provided with respect to respective light fluxes. That is, a configuration in which two image-capturing elements of an image-capturing element that captures the image of the light flux irradiated from the first light source 41a and an image-capturing element that captures the image of the light flux irradiated from the second light source 41b are included may be available.

### <Light source>

The light source 41 consists of two light sources of the first light source 41a and the second light source 41b. The first light source 41a is arranged on the optical axis L1. The light flux emitted from the first light source 41a passes through a half mirror 49 and is directed to the lens LE. The second light source 41b is arranged on an optical axis L2. The light flux emitted from the second light source 41b is reflected from the half mirror 49 such that the light flux is coincided with the optical axis L1 and is directed to the lens LE.

In the present embodiment, the first light source 41a is fixed to be arranged on the optical axis L1 and the second light source 41b is fixed to be arranged on the optical axis L2. The first light source 41a emits (irradiates) the light flux having the first wavelength (for example, the infrared ray having the peak wavelength of 875nm) which passes through the light transmitting part 44a and is blocked by the light blocking part 44b in the index plate 44 which will be described later. The second light source 41b emits the light flux having the second wavelength (for example, the visible light ray having the peak wavelength of 520nm) which passes through both the light transmitting part 44a and the light blocking part 44b in the index plate 44 which will be described later.

In the present embodiment, a configuration in which each of the first light source 41a and the second light source 41b is fixed to be arranged on the optical axis is described by way of an example, but is not limited thereto. Particularly, a configuration in which the first light source 41a and the second light source 41b are movable may be available. The first light source 41a and the second light source 41b are moved so that one light source within the first light source 41a and the second light source 41b is arranged on the optical axis L1. The first light source 41a and the second light source 41b are moved so that the other light source is deviated from the optical axis L1. The position deviated from the optical axis L1 may be located on an optical path of the optical axis L1 and may be a position deviated from the optical path of the optical axis L1.

More particularly, in a case where the lens LE is measured by being irradiated with the light flux having the first wavelength, the first light source 41a is moved on the optical axis L1. In this case, the second light source 41b is moved to the position deviated from the optical axis L1. In a case where the lens LE is measured by being irradiated with the light flux having the second wavelength, the second light source 41b is moved on the optical axis L1. In this case, the first light source 41a is moved to the position deviated from the optical axis L1.

In the present embodiment, although a light source which emits the infrared ray having the peak wavelength of 875nm is used as the first light source 41a and a light source which emits the visible light ray having the peak wavelength of 520nm as the second light source 41b, the light flux having the wavelength to be emitted by each light source is not limited thereto. In the present embodiment, the light source may be a light source which emits a light flux having a specific wavelength band. Such a light source may be a light source (for example, laser or the like) which emits a light flux having a narrow wavelength band and may be a light source (for example, light emitting diode (LED) or the like) which emits a light flux having a wide wavelength band.

In the present embodiment, the light source may have a configuration in which a first light source irradiating the lens LE with a light flux having a first wavelength and a second light source irradiating the lens LE with a light flux having a second wavelength different from the first wavelength are included. The light flux having the second wavelength different from the first wavelength may be a light flux having a wavelength which is different from at least one of a peak wavelength of the first wavelength and the second wavelength and a wavelength band of the first wavelength and the second wavelength. In this case, the first light source 41a and the second light source 41b may have a configuration in which a light source which emits a visible light ray is used in any of the first light source and the second light source as long as the first and second light sources have at least one of a different peak wavelength and a different wavelength band. In this case, the first light source 41a and the second light source 41b may have a configuration in which a light source which emits an infrared ray is used in any of the first light source and the second light source as long as the first and second light sources have at least one of a different peak wavelength and a different wavelength band.

### <Index plate>

Fig. 5 is a diagram illustrating an example of a configuration of an index plate. Fig. 5 (a) is a diagram when the index plate is viewed from the side direction. Fig. 5 (b) is a diagram when the index plate 44 is viewed from the front direction (optical axis L1 direction). The index plate 44 includes the light transmitting part 44a, the light blocking part 44b, a base member 44c, and the like. In the present embodiment, a disc member, which is a base member formed in a disc shape, is used as the base member 44c. Also, the base member 44c may be a member formed in a different shape (for example, a quadrilateral shape, a hexagonal shape, and the like).

The light transmitting part 44a has a characteristic that allows the light flux having the first wavelength irradiated from the first light source 41a and the light flux having the second wavelength irradiated from the second light source 41b to pass through (transmit). The light transmitting part 44a has a configuration in which the light flux having the first wavelength and the light flux having the second wavelength are completely transmitted, but is not limited thereto. The light transmitting part 44a may have a configuration in which at least a portion of the light flux having the first wavelength and the light flux having the second wavelength is transmitted. In this case, a configuration in which the light fluxes of the first wavelength allowed to transmit the light transmitting part 44a is greater than the light fluxes of the first wavelength allowed to transmit the light blocking part 44b may be available. In this case, a configuration in which the light fluxes of the second wavelength allowed to transmit the light transmitting part 44a is less than the light fluxes of the second wavelength allowed to transmit the light blocking part 44b may be available.

The light transmitting part 44a is provided on at least one of a front surface and a back surface of the base member (in the following, described as a disc member) 44c. In the present embodiment, description will be made on a case where the light transmitting part 44a is provided on one of the front and back surfaces by way of an example. In the present embodiment, the light transmitting part 44a is formed by coating a material of the light transmitting part 44a on the entire area (entire surface) of the disc member 44c in one of the front and back surfaces of the disc member 44c.

The light blocking part 44b has a characteristic that blocks the light flux having the first wavelength irradiated from the first light source 41a and allows the light flux having the second wavelength irradiated from the second light source 41b to pass through (transmit). The light blocking part 44b has a configuration in which the light flux having the first wavelength is completely transmitted, but is not limited thereto. The light blocking part 44b may have a configuration in which at least a portion of the light fluxes of the first wavelength is blocked. The light blocking part 44b has a configuration in which the light flux having the second wavelength is completely transmitted, but is not limited thereto. The light blocking part 44b may have a configuration in which at least a portion of the light fluxes of the second wavelength is blocked. In such a case, a configuration in which an amount of the light fluxes of the second wavelength blocked by the light blocking part 44b is less than that of the first wavelength blocked by the light blocking part 44b may be available. The light blocking part 44b may have a configuration in which more light fluxes of the first wavelength are blocked. Preferably, a configuration in which the light fluxes of the first wavelength are completely blocked may be available.

The light blocking part 44b is provided on at least one of the front surface and the back surface of the disc member 44c. In the present embodiment, description will be made on a case where the light blocking part 44b is provided on one of the front and back surfaces by way of an example. In the present embodiment, the light blocking part 44b is formed by coating a material of the light blocking part 44b on a partial area on the disc member 44c, in one surface of the disc member 44c.

The light transmitting part 44a and the light blocking part 44b are formed with respect to the disc member 44c so that the light transmitting part 44a has a pattern of a grid shape (at an equal interval and a lattice shape). The light transmitting part 44a and the light blocking part 44b may be formed with respect to the disc member 44c so that the light blocking part 44b has a pattern of a grid shape.

The light transmitting part 44a and the light blocking part 44b may be formed with respect to the disc member 44c so that the light transmitting part 44a has a plurality of transmitting points distributed on the index plate.

In the present embodiment, a configuration in which the pattern of the grid shape is formed by the light transmitting part 44a and the light blocking part 44b in the index plate 44 is included as an example, but is not limited thereto. A configuration in which a different pattern is formed may be adopted as the pattern shape. As the pattern shape, a pattern shape in which the light transmitting part and the light blocking part may be arranged at irregular intervals and may be arranged in a radial shape.

In the present embodiment, the light transmitting part 44a and the light blocking part 44b are formed on the same surface of the disc member 44c. A configuration in which the light transmitting part 44a is formed on one surface of the disc member 44c and the light blocking part 44b is formed on the other surface of the disc member 44c may be available.

In the present embodiment, the light blocking part 44b is formed on the light transmitting part 44a in the index plate 44. In this case, the index plate 44 may be manufactured by forming the light blocking part 44b by coating after the light transmitting part 44a is formed on the disc member 44c by coating. In the present embodiment, a configuration in which the light blocking part 44b is formed on the light transmitting part 44a in the index plate 44 is described by way of an example, but is not limited thereto. Particularly, a configuration in which the light transmitting part 44a is formed on the light blocking part 44b may be available. Also, a configuration in which the light transmitting part 44a is formed on a portion (a portion between light blocking parts 44b) in which the light blocking part 44b is not formed without forming the light blocking part 44b on the light transmitting part 44a may be available. In such a case, the light transmitting part 44a may be coated on the disc member 44c after the light blocking part 44b is coated on a partial area on the disc member 44c.

In the present embodiment, a configuration in which the index plate 44 is formed by coating the light transmitting part 44a and the light blocking part 44b is described by way of an example, but is not limited thereto. Particularly, the index plate 44 may also be formed by coating only one of the light transmitting part 44a and the light blocking part 44b on the disc member 44c. In this case, a configuration in which a material (material of the base member which also serves as the light blocking part) through which the light flux having the first wavelength and the light flux having the second wavelength are passed is used as the disc member 44c may be included. The light blocking part 44b may be coated on a partial area of such a disc member 44c. That is, a material by which the light flux having the first wavelength is blocked and through which the light flux having the second wavelength is passed may be coated. In this case, a configuration in which a material (material of the base member which also serves as the light transmitting part) by which the light flux having the first wavelength is blocked and through which the light flux having the second wavelength is passed is used as the disc member 44c may be included. The light transmitting part 44a may be coated on a partial area of such a disc member 44c. That is, a material by which light-blocking characteristic of the light blocking part is suppressed and through which the light flux having the first wavelength is allowed to pass may be coated.

In the present embodiment, as a method for performing coating on the disc member (base member) 44c, deposition, immersion, painting, or the like can be used. A method for forming at least one of the light transmitting part and the light blocking part on the index plate is not limited to coating. In the present embodiment, a method in which the materials are adhered to the base member to form the light transmitting part and the light blocking part may be available. Various printing (for example, silk printing, or the like) may be performed on the base member to form the light transmitting part and the light blocking part on the index plate.

The method for forming at least one of the light transmitting part and the light blocking part on the index plate is not limited to coating. In the present embodiment, a method in which the light transmitting part and the light blocking part are formed by opening the through hole in the base member may be available. More particularly, a member that blocks the light flux having the first wavelength and allows the light flux having the second wavelength to pass through is used as the base member to open the through hole in the base member and form a pattern of a grid shape. Thus, when irradiation is made by the first light source, the light flux having the first wavelength passes through only the through hole and thus, the index pattern image of the lens can be acquired. When irradiation is made by the second light source, the light flux having the second wavelength passes through both the base member and the through hole and thus, the lens image can be acquired.

### <Retro-reflective member>

Fig. 6 is a diagram illustrating an embodiment of a configuration of a retro-reflective member. The retro-reflective member 45 is a plate having the thickness of approximately 100µm. The retro-reflective member 45 includes a fine glass small sphere 51, a reflection film 52, a light transmission cover 53, a substrate 54, and the like. Incident light T1 incident onto the retro-reflective member 45 passes through the light transmission cover 53, is refracted by the glass small sphere 51, and is focused on a single point in the vicinity of the spherical surface of the glass small sphere 51. The incident light T1 is reflected by the reflection film 52 and becomes reflected light T2. The reflected light T2 is refracted by the glass small sphere 51 again and becomes substantially parallel to the incident light T1 and is reflected in the original incident direction. A configuration of the retro-reflective member is not limited to that of the present embodiment. In the present embodiment, a retro-reflective member capable of reflecting the light flux in a direction which is substantially the same as the incident light direction may be available. That is, as the configuration of the retro-reflective member, a configuration in which a micro corner cube, a micro-prism, or the like is used, without being limited to the glass small sphere, can be used.

In the present embodiment, the retro-reflective member 45 is moved at high speed about the optical axis L1 by a motor (not illustrated) or the like. There is variation in distribution of the glass small sphere 51 or the reflection film 52 and thus reflection unevenness occurs in the retro-reflective member 45. However, as described above, the retro-reflective member 45 is moved so as to make it possible to uniformize reflection unevenness. As a configuration for moving the retro-reflective member 45, a configuration in which the retro-reflective member is moved using various movement methods can be applied. As movement of the retro-reflective member 45, rotation movement, linear movement, or elliptical movement may be available. In the present embodiment, although the configuration in which the retro-reflective member 45 is moved is described by way of an example, a configuration in which the retro-reflective member 45 is not rotated may be available.

In the present embodiment, a configuration in which the retro-reflective member is used as a member reflecting the incident light T1 is described by way of an example, but is not limited thereto. A reflection member reflecting incident light T1 may be available. As the reflection member, a screen which enhances scattering action of incident light, or the like may be used.

### <Control unit>

Fig. 7 is a diagram of a schematic configuration of a control system in the cup attachment device 1. A control unit 60 is connected with the display 2, the eyeglasses frame-shaped measurement unit 20, the light source 41 (first light source 41a and second light source 41b), the image-capturing element 48, a non-volatile memory 61, and the like. The control unit 60 is connected with the motor 34 included in the cup attachment mechanism 30, an X-direction driving means 35a included in the X-direction moving mechanism 35, a Y-direction driving means 36a included in the Y-direction moving mechanism 36, a Z-direction driving means 37a included in the Z-direction moving mechanism 37, and the like.

The control unit 60 includes a CPU (processor), a RAM, a ROM, or the like. The CPU of the control unit 60 controls driving of respective units (for example, driving of the motor 34, the X-direction driving means 35a, the Y-direction driving means 36a, the Z-direction driving means 37a, and the like). The CPU of the control unit 60 performs various operation processing (for example, operation processing of an optical characteristic of a lens, lens information different from the optical characteristic of the lens, or the like). The RAM of the control unit 60 temporarily stores various pieces of information. The ROM of the control unit 60 stores a program to be executed by the CPU, an initial value, and the like.

In the present embodiment, the CPU of the control unit 60 controls switching of the first light source 41a and the second light source 41b, or the like. The control unit 60 has a detection function of detecting an appearance of the lens, a small sphere shape of a bifocal lens, a print mark of a progressive lens, a printing point formed on the lens, a shape or position of a hole opened in the lens, or the like by performing image processing on the lens image captured by the image-capturing element 48. In the present embodiment, the control unit 60 performs image processing on the index pattern image of the lens captured by the image-capturing element 48 to detect a position of each measurement index pattern image 50 and calculates the optical characteristic of a lens. The control unit 60 may be configured with a plurality of control units (that is, a plurality of processors).

The non-volatile memory 61 is a non-transitory storage medium capable of holding stored contents even when supply of power is shut off. As the non-volatile memory 61, a hard disk drive, a flash ROM, a USB memory, and the like can be used. In the non-volatile memory 61, an index pattern image 50 in a reference state 0D of the lens which will be described later, a measurement result of the optical characteristic, a target lens shape of a eyeglasses frame traced by the eyeglasses frame-shaped measurement unit 20, and the like are stored.

An operation of the cup attachment device 1 having the configuration described above will be described. In the present embodiment, the cup attachment device 1 has a first measurement mode and a second measurement mode. The first measurement mode is a mode for measuring an optical characteristic of a lens by using the light flux having the first wavelength irradiated from the first light source 41a. The second measurement mode is a mode for measuring lens information different from the optical characteristic of the lens by using the light flux having the second wavelength irradiated from the second light source 41b.

In the present example, the first measurement mode and the second measurement mode are used by being switched. A configuration in which switching of the first measurement mode and the second measurement mode is automatically performed may be available. A configuration in which selection of the first measurement mode and the second measurement mode is manually performed by the inspector may be available.

### <First measurement mode>

In the following, the first measurement mode will be described in detail. In the first measurement mode, the first light source 41a is selected as the light source 41 and the light flux having the first wavelength is irradiated. The control unit 60 turns on the first light source 41a fixed to be arranged on the optical axis L1.

As illustrated in Fig. 4, the light flux having the first wavelength emitted from the first light source 41a passes through the half mirror 49, is reflected from the half mirror 42, becomes a parallel light flux through the condenser lens 43, and is projected onto the lens LE. The index plate 44 is irradiated with the light flux having the first wavelength transmitted through the lens LE. Here, the light flux with which the light blocking part 44b of the index plate 44 is irradiated, among the light fluxes of the first wavelength transmitted through the lens LE, is blocked by the light blocking part 44b. That is, the light flux with which the light blocking part 44b of the index plate 44 is irradiated, among the light fluxes of the first wavelength transmitted through the lens LE, is blocked without passing through the index plate 44. On the other hand, the light flux with which the light transmitting part 44a of the index plate 44 is irradiated, among the light fluxes of the first wavelength transmitted through the lens LE, passes through the index plate 44 and is incident onto the retro-reflective member 45.

When the light flux having the first wavelength is reflected by the retro-reflective member 45, the light flux having the first wavelength is captured by the image-capturing element 48 again through the light transmitting part 44a included in the index plate 44, the lens LE, the condenser lens 43, the half mirror 42, the diaphragm 46, and the image-capturing lens 47.

Fig. 8 is a diagram illustrating an image-capture result of a lens using the first light source 41a. When the light flux having the first wavelength passing through the lens LE is captured by the image-capturing element 48, the index pattern image 50 is captured.

The index pattern image is an image based on a pattern shape formed by the light transmitting part 44a and the light blocking part 44b on the index plate 44. That is, in the present embodiment, the light transmitting part 44a is configured to become a pattern of a grid shape in the index plate 44 and thus, the index pattern image captured by the image-capturing element 48 is formed in the pattern of the grid shape. That is, in a case where the index plate 44 is irradiated with the light flux having the first wavelength from the first light source 41a, the light flux having the first wavelength passes through the light transmitting part 44a and thus, the pattern shape formed by the light transmitting part 44a is formed as the index pattern image 50. The index pattern image is formed by a plurality of small hole images 50a and a plurality of support pin images 50b. In a case where the light flux having the second wavelength is irradiated from the second light source 41b, the light flux having the second wavelength passes through both the light transmitting part 44a and the light blocking part 44b of the index plate 44 and thus, the captured image-capture result does not form the index pattern image 50 (details will be described later).

The image-capture result (index pattern image 50) captured by using the light flux having the first wavelength from the first light source 41a is used for calculating the optical characteristic of the lens LE. In a case where the lens LE is placed on the support pin 14, the light flux having the first wavelength is refracted by the lens LE and thus, the index pattern image 50 to be captured by the image-capturing element 48 is changed according to refraction by the lens. The index pattern image to be captured by the image-capturing element 48 in a state of a ┌0D reference┘ state in which the lens LE is not placed on the support pin 14 is stored in a memory 61. The control unit 60 calculates the optical characteristic of the lens LE based on a change amount of the index pattern image captured through the lens LE with respect to the index pattern image indicating the ┌0D reference┘.

In the present embodiment, the captured index pattern image 50 is analyzed so as to make it possible to measure refraction degrees at a plurality of positions of the lens LE at one time and calculate the optical characteristics at respective positions at one time. In the present example, the pattern shape formed on the index plate 44 is formed in a grid pattern shape and thus, the captured index pattern image also becomes the grid pattern shape. The optical characteristic of the lens LE is calculated by using adjacent four (at least three) small hole images 50a within the index pattern image 50 as a single set. Well-known art is applied for measurement of the optical characteristic of the lens LE using the index pattern image 50 and thus, for details thereof, please refer to JP-A-2008-241694.

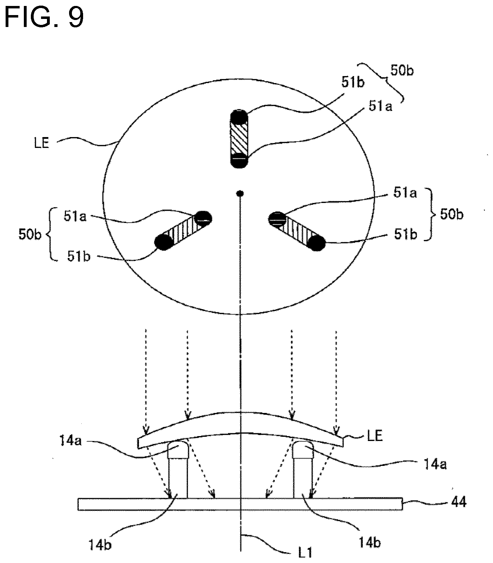

In the present embodiment, description will be made on a case where an image of the support pin 14 is used as a reference index when the optical characteristic of the lens LE is measured. Fig. 9 is a diagram for explaining an image of the support pin 14 in a state where the lens LE is placed on the support pin 14. In Fig. 9, for convenience, illustration of the small hole image 50a is omitted. In the 0D reference state, a position of an image of a base 14b of the support pin and a position of an image of a top 14a of the support pin to be captured by the image-capturing element 48 are substantially the same and the images are overlapped. However, when the lens LE is placed on the support pin 14 and the light flux having the first wavelength is refracted by the lens LE, the small hole image 50a and the support pin image 50b in the index pattern image 50 to be captured by the image-capturing element 48 are expanded or contracted with respect to the index pattern image 50 of the 0D reference state.

More particularly, the top 14a of the support pin 14 abuts on the lens LE and thus, an image 51a of the top 14a of the support pin 14 to be captured by the image-capturing element 48 is not moved greatly and is located at the position which is substantially the same as that in the 0D reference state. However, the base 14b of the support pin 14 is away from the lens LE and thus, an image 51b of the base 14b of the support pin to be captured by the image-capturing element 48 is influenced by refraction by the lens LE and the position of the image is greatly deviated compared to the 0D reference state.

The control unit 60 detects the position of the top 14a of the support pin 14 from the index pattern image 50 captured by the image-capturing element 48 and determines the position of the base 14b of the support pin 14 based on the position of the top. The control unit 60 uses the image 51b of the base 14b of the support pin 14 as a reference index for detecting positional displacement of each small hole image 50a on the index pattern image 50. That is, the image of the base 14b of the support pin is used for specifying whether the small hole image 50a at a certain position in the index pattern image 50 changed by placing the lens LE on the support pin 14 corresponds to which small hole image 50a within respective small hole images 50a in the index pattern image 50 in a state of the 0D reference state. In the present embodiment, the base 14b of the support pin 14 is adjacent to the index plate 44 and thus, the image can be used to grasp a positional relationship between the base 14b and the light transmitting part 44a.

In the present embodiment, a configuration in which the base 14b of the support pin is used as the reference index is adopted, but is not limited thereto. In the present embodiment, a reference index with which the position of each small hole image 50a can be specified in the index pattern image 50 may be available. In this case, a configuration in which the shape or the size of at least one of the light transmitting parts 44a formed on the index plate 44 is changed and the changed shape or size is used as the reference index is included. As the reference index, a reference index having a configuration in which a configuration, in which the shape and the size of the light transmitting part 44a is changed and used as described above and a configuration, in which the base 14b of the support pin is used, are used jointly may be available. Regarding the configuration in which the shape or the size of at least one of the light transmitting parts 44a formed on the index plate 44 is changed and the changed shape or size is used as the reference index, please refer to JP-A-2008-241694.

As described above, in the first measurement mode, the light flux having the first wavelength irradiated from the first light source 41a passes through the light transmitting part 44a included in the index plate 44 and is blocked by the light blocking part 44b included in the index plate 44 and thus, the index pattern image 50 is captured. The control unit 60 calculates the optical characteristic of the lens LE using the index pattern image 50 captured by the image-capturing element 48. With this, in the present embodiment, it is possible to measure the optical characteristic of the lens LE in the first measurement mode.

### <Second measurement mode>

In the following, description will be made on a second measurement mode. In the second measurement mode, the second light source 41b is selected as the light source 41 and the light flux having the second wavelength is irradiated. The control unit 60 turns on the second light source 41b fixed to be arranged on the optical axis L2.

As illustrated in Fig. 4, the light flux having the second wavelength emitted from the second light source 41b is reflected from the half mirror 49 and is coincided with the optical axis L1. The light flux having the second wavelength reflected by the half mirror 49 is reflected from the half mirror 42, becomes a parallel light flux through the condenser lens 43, and is projected onto the lens LE. The light flux having the second wavelength transmitted through the lens LE passes through both the light transmitting part 44a and the light blocking part 44b included in the index plate 44 and is incident onto the retro-reflective member 45.

When the light flux having the second wavelength is reflected by the retro-reflective member 45, the light flux having the second wavelength is captured by the image-capturing element 48 again through the light transmitting part 44a included in the index plate 44, the lens LE, the condenser lens 43, the half mirror 42, the diaphragm 46, and the image-capturing lens 47.

As such, in the second measurement mode, the light flux having the second wavelength irradiated from the second light source 41b passes through the entire area (that is, the light transmitting part 44a and the light blocking part 44b of the index plate 44) of the index plate 44 and thus, the image-capturing element 48 can capture the entire image (lens image) of the lens LE. The control unit 60 performs processing on the lens image captured by the image-capturing element 48 so as to detect lens information (for example, appearance information of a lens, information of a small sphere shape of a lens, print mark information of a lens, concealed mark information of a lens, information of printing point formed on the lens, shape information of a hole opened in the lens, position information of the hole opened in the lens, or the like) different from the optical characteristic.

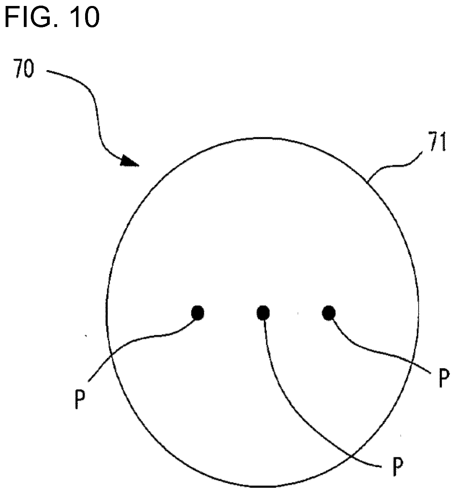

Fig. 10 is a diagram illustrating an image-capture result of the lens using the second light source 41b. In Fig. 10, for convenience, illustration of the image 51a of the top of the support pin and the image 51b of the base of the support pin is omitted. When the light flux having the second wavelength passing through the lens LE is captured by the image-capturing element 48, the lens image 70 is captured. In Fig. 10, a case in which the printing point formed on the lens LE is captured in the lens image is included as an example.

The control unit 60 acquires lens information from the captured lens image 70 through image processing. The control unit 60 can detect the printing point formed on the lens LE from the lens image 70. The control unit 60 performs edge detection through image processing and detects an appearance shape 71 of the lens, a printing point mark (an image of a printing point formed on the lens LE) P, and the like. In detection of lens information, a configuration in which a different image processing method is used may be available.

As described above, in the second measurement mode, the light flux having the second wavelength irradiated from the second light source 41b passes through the light transmitting part 44a and the light blocking part 44b included in the index plate 44 and the lens image 70 is captured. The control unit 60 uses the lens image 70 captured by the image-capturing element 48 to calculate lens information different from the optical characteristic of the lens LE. Thus, in the present embodiment, lens information different from the optical characteristic of the lens LE can be measured in the second measurement mode.

In the following, measurement of lens information different from the optical characteristic of the lens LE will be described in detail. Description will be made on a case where the second measurement mode is used to measure a bifocal lens. When the inspector operates a measurement mode selection switch (not illustrated) to select the second measurement mode, the control unit 60 automatically sets the second measurement mode. When the second measurement mode is set, the light flux having the second wavelength is irradiated from the second light source 41b and the lens image is captured by the image-capturing element 48. The control unit 60 can acquire lens information different from the optical characteristic by performing image processing on the lens image captured by the image-capturing element 48. In a case where a lens to be measured is a bifocal lens, appearance information of a lens, information of a small sphere shape of a lens, or the like is included as lens information different from the optical characteristic. Lens information other than those pieces of information described above may be detected.

Description will be made on, a case where a progressive lens is measured using the second measurement mode. When the inspector operates a measurement mode selection switch (not illustrated) to select the second measurement mode, the control unit 60 automatically sets the second measurement mode. When the second measurement mode is set, the light flux having the second wavelength is irradiated from the second light source 41b and the lens image is captured by the image-capturing element 48. The control unit 60 can acquire lens information different from the optical characteristic by performing image processing on the lens image. In a case where the lens LE to be measured is a progressive lens, appearance information of a lens, concealed mark information of a lens, print mark information of a lens, or the like are included as lens information different from the optical characteristic. Lens information other than those pieces of information described above may be detected.

As such, the measurement result measured using at least one of the first measurement mode and the second measurement mode is used for various processing. In the cup attachment device 1, an operation of attaching a cup to a lens, or the like is performed based on the measurement result measured using at least one of the first measurement mode and the second measurement mode.

In the above-description, a configuration in which the light blocking part 44b blocks the light flux having the first wavelength in the index plate 44 is described, but is not limited thereto. Particularly, the light blocking part 44b may be configured to transmit at least a portion of the light fluxes of the first wavelength.

The light blocking part 44b blocks at least a portion of the light fluxes of the first wavelength. In other words, the light blocking part 44b does not completely block the light fluxes of the first wavelength and transmits a portion of the light fluxes of the first wavelength. In such a configuration, in a case where the first measurement mode is selected and the light flux having the first wavelength is irradiated from the first light source 41a, a periphery of the small hole image 50a (that is, a portion formed by the light blocking part 44b) becomes bright compared to a periphery of the small hole image 50a in a state where the light fluxes of the first wavelength is completely blocked, in the index pattern image 50 projected onto the lens LE. For that reason, it may be difficult to discern between the small hole image 50a and the periphery of the small hole image 50a.

For that reason, the control unit 60 may perform binarization processing on the index pattern image 50 captured by the image-capturing element 48 to clarify the small hole image 50a and the periphery of the small hole image 50a. The control unit 60 detects a luminance value at respective pixel positions of the captured index pattern image 50. The control unit 60 binarizes the detected luminance value based on a threshold value which is set in advance from an experiment, simulation, or the like. Such a threshold value may be arbitrarily set by an operator or may be set for each photographed index pattern image. In this case, the threshold value may be set using statistical information due to an average or standard deviation of the luminance values in all pixel positions.

The control unit 60 replaces a luminance value of a pixel position having a luminance value greater than or equal to the threshold value and a luminance value of a pixel position having a luminance value less than or equal to the threshold value in those pixel position, respectively. In the present embodiment, the pixel position having the luminance value greater than or equal to the threshold value is replaced with 255 (white) and the pixel position having the luminance value less than or equal to the threshold value is replaced with 0 (black). A configuration in which two values different from each other when using the threshold value as a boundary are used as the luminance values may be available, but is not limited to the present embodiment.

The control unit 60 may perform such binarization processing so as to enhance detection accuracy of the index pattern image 50. With this, it is possible to accurately acquire the optical characteristic of the lens LE even in a state where at least a portion of the light fluxes of the first wavelength can is blocked and the small hole image 50a and the periphery of the small hole image 50a are not clearly branched.

In the above-description, a configuration in which the light transmitting part 44a transmits the light flux having the second wavelength in the index plate 44 is described, but is not limited thereto. The light transmitting part 44a may be configured to block at least a portion of the light fluxes of the second wavelength.

The light transmitting part 44a transmits at least a portion of the light fluxes of the second wavelength. In other words, the light transmitting part 44a blocks a portion of the light fluxes of the second wavelength. In such a configuration, in a case where the second measurement mode is selected and the light flux having the second wavelength is irradiated from the second light source 41b, the small hole image 50a projected onto the lens LE becomes dark compared to the periphery of the small hole image 50a. For that reason, the small hole image 50a may be photographed in the index pattern image 50 captured by the image-capturing element 48.

Even in such a case, the control unit 60 may perform binarization processing described above. With this, even in a state where at least a portion of the light fluxes of the second wavelength is transmitted through and the small hole image 50a is captured, it becomes possible to accurately detect lens information different from the optical characteristic except for the small hole image 50a.

As described above, in the present embodiment, the lens measurement device (the cup attachment device in the present embodiment) uses the index plate that includes the light transmitting part which allows the light flux having the first wavelength and the light flux having the second wavelength to pass through and the light blocking part which blocks an area different from the light transmitting part, blocks the light flux having the first wavelength, and transmits the light flux having the second wavelength. With this, it is possible to accurately acquire the optical characteristic of the lens and lens information with a simple configuration.

In the present embodiment, the light transmitting part and the light blocking part are formed in the index plate by coating so as to make it possible to easily provide the light blocking part and the light transmitting part on the index plate. That is, it is possible to easily manufacture the index plate provided with the light transmitting part and the light blocking part.

In the present embodiment, a configuration in which two light sources of the first light source 41a and the second light source 41b that emit the light fluxes of different wavelengths are used as light sources, but is not limited thereto. In the present embodiment, a light source with which different wavelengths can be selectively used may be available. That is, a configuration in which a single light source is used may be available. In this case, a configuration in which a filter which allows only a light flux having a predetermined wavelength to pass through, a filter which blocks only the light flux having the predetermined wavelength, or the like is provided on an irradiation port of the light source and the filter is inserted to and removed from the irradiation port of the light source is included.

A configuration in which a light source capable of emitting the light fluxes having at least two kinds of wavelengths is used as the light source capable of selectively using different wavelengths may be available. In a case where the light source capable of emitting the light fluxes having two kinds of wavelengths is used, it is possible to selectively use two kinds of different wavelengths by switching the light fluxes to be emitted from the light source. In a case where a light source (for example, a multicolor LED or the like) capable of emitting the light fluxes having three or more kinds of wavelengths is used, a configuration in which two kinds light fluxes can be selected among a plurality of light fluxes emitted from the light source may be available. With this, even when the light source emitting the light fluxes having three or more kinds of wavelengths is used, it is possible to selectively use two kinds of different wavelengths.

The wavelengths of the first light source 41a and the second light source 41b may be reversed with respect to those in the present embodiment. That is, a configuration in which the light flux having the first wavelength emitted by the first light source 41a passes through the light transmitting part 44a and the light blocking part 44b of the index plate 44 and the light flux having the second wavelength emitted by the second light source 41b passes through the light transmitting part 44a of the index plate 44 and is blocked by the light blocking part 44b may be available. In this case, the light flux having the first wavelength irradiated from the first light source 41a is used so as to make it possible to measure lens information different from the optical characteristic of the lens. The light flux having the second wavelength irradiated from the second light source 41b is used so as to make it possible to measure the optical characteristic of the lens.

In the present embodiment, a configuration in which the first light source and the second light source are used in common and the light flux having the first wavelength and the light flux having the second wavelength are switched and irradiated from the commonly used light source is used such that the optical characteristic of the lens and lens information it can be acquired by switching of a single light source. With this, it is possible to accurately acquire the optical characteristic of the lens and lens information with a simpler configuration. It is possible to reduce the number of members required for acquisition of the optical characteristic of the lens and lens information and thus, miniaturization of a device can be achieved.

## Claims

1. A lens measurement device (40) configured to measure an optical characteristic of a lens, comprising:
a first light source (41a) configured to irradiate a lens with a first light flux having a first wavelength;
a second light source (41b) configured to irradiate the lens with a second light flux having a second wavelength different from the first wavelength;
an index plate (44) that includes a light transmitting part (44a) configured to allow the first light flux and the second light flux to pass through, and a light blocking part (44b) configured to shield an area different from the light transmitting part by blocking the light flux having the first wavelength and transmitting the light flux having the second wavelength;
a first image-capturing element (48) configured to capture an index pattern image based on the first light flux which has passed through the lens and the index plate; and
a second image-capturing element (48) configured to capture a lens image based on the second light flux which has passed through the lens and the index plate;
**characterized by** the fact that it further comprises
acquisition means (60) configured to acquire the optical characteristic of the lens based on the index pattern image captured by the first image-capturing element and to acquire lens information based on the lens image captured by the second image-capturing element, the lens information being different from the optical characteristic of the lens.

2. The lens measurement device according to claim 1, wherein
the first light source (41a) is used in common as the second light source (41b), and
the lens measurement device (40) comprises irradiation control means configured to switch irradiation of the first light flux by the first light source (41b) and irradiation of the second light flux by the second light source (41b).

3. The lens measurement device according to Claim 1 or 2,
wherein a thin film is formed on a base member (44c) of the index plate (44) by coating treatment to form at least one of the light transmitting part (44a) and the light blocking part (44b).

4. The lens measurement device according to any one of Claims 1 to 3,
wherein the light transmitting part (44a) has a plurality of transmitting points distributed on the index plate.

5. The lens measurement device according to any one of Claims 1 to 4,
wherein the light transmitting part (44a) is formed in a pattern of a grid shape.

## Patentansprüche

1. Brillenglas-Messvorrichtung (40), die zum Messen einer optischen Eigenschaft eines Brillenglases konfiguriert ist, umfassend:
eine erste Lichtquelle (41a), die zum Bestrahlen des Brillenglases mittels eines ersten Lichtstroms mit einer ersten Wellenlänge konfiguriert ist;
eine zweite Lichtquelle (41b), die zum Bestrahlen des Brillenglases mittels eines zweiten Lichtstroms mit einer zweiten Wellenlänge, die sich von der ersten Wellenlänge unterscheidet, konfiguriert ist;
eine Indexplatte (44), die einen lichtdurchlässigen Abschnitt (44a), der zum Ermöglichen des Durchtritts des ersten Lichtstroms und des zweiten Lichtstroms konfiguriert ist, und einen lichtundurchlässigen Abschnitt (44b) umfasst, der zum Abschirmen eines Bereichs, der sich vom lichtdurchlässigen Abschnitt unterscheidet, durch Blockieren des Lichtstroms mit der ersten Wellenlänge und Durchlassen des Lichtstroms mit der zweiten Wellenlänge konfiguriert ist;
ein erstes Bilderfassungselement (48), das zum Erfassen eines Indexmusterbilds basierend auf dem ersten Lichtstrom, der das Brillenglas und die Indexplatte passiert hat, konfiguriert ist; und
ein zweites Bilderfassungselement (48), das zum Erfassen eines Brillenglasbilds basierend auf dem zweiten Lichtstrom, der das Brillenglas und die Indexplatte passiert hat, konfiguriert ist;
**dadurch gekennzeichnet, dass** diese ferner eine Erfassungseinrichtung (60) umfasst, die zum Erfassen der optischen Eigenschaft des Brillenglases basierend auf dem durch das erste Bilderfassungselement erfassten Indexmusterbilds, und zum Erfassen von Brillenglasinformationen basierend auf dem durch das zweite Bilderfassungselement erfassten Brillenglasbilds konfiguriert ist, wobei sich die Brillenglasinformationen von der optischen Eigenschaft der Linse unterscheiden.

2. Brillenglas-Messvorrichtung nach Anspruch 1, wobei die erste Lichtquelle (41a) gemeinsam als zweite Lichtquelle (41b) verwendet wird; und
die Linsenmessvorrichtung (40) eine Bestrahlungssteuerungseinrichtung umfasst, die zum Umschalten der Bestrahlung des ersten Lichtstroms durch die erste Lichtquelle (41b) und der Bestrahlung des zweiten Lichtstroms durch die zweite Lichtquelle (41b) konfiguriert ist.

3. Brillenglas-Messvorrichtung nach Anspruch 1 oder 2,
wobei eine dünne Schicht auf einem Basiselement (44c) der Indexplatte (44) durch eine Beschichtungsbehandlung gebildet wird, um den lichtdurchlässigen Abschnitt (44a) und/oder den lichtundurchlässigen Abschnitt (44b) zu bilden.

4. Brillenglas-Messvorrichtung nach einem der Ansprüche 1 bis 3,
wobei der lichtdurchlässige Abschnitt (44a) eine Vielzahl von auf der Indexplatte verteilten Durchlasspunkten aufweist.

5. Brillenglas-Messvorrichtung nach einem der Ansprüche 1 bis 4,
wobei der lichtdurchlässige Abschnitt (44a) in einem gitterförmigen Muster ausgebildet ist.

## Revendications

1. Dispositif de mesure de lentille (40) configuré pour mesurer une caractéristique optique d'une lentille, comprenant :
une première source de lumière (41a) configurée pour irradier une lentille avec un premier flux lumineux ayant une première longueur d'onde ;
une deuxième source de lumière (41b) configurée pour irradier la lentille avec un deuxième flux lumineux ayant une deuxième longueur d'onde différente de la première longueur d'onde ;
une plaque d'indice (44) qui comporte une partie de transmission de lumière (44a) configurée pour permettre au premier flux lumineux et au deuxième flux lumineux de passer à travers celle-ci, et une partie de blocage de lumière (44b) configurée pour protéger une zone différente de la partie de transmission de lumière en bloquant le flux lumineux ayant la première longueur d'onde et en transmettant le flux lumineux ayant la deuxième longueur d'onde ;
un premier élément de capture d'image (48) configuré pour capturer une image de motif d'indice sur la base du premier flux lumineux qui est passé à travers la lentille et la plaque d'indice ; et
un deuxième élément de capture d'image (48) configuré pour capturer une image de lentille sur la base du deuxième flux lumineux qui est passé à travers la lentille et la plaque d'indice ;
**caractérisé par le fait qu'**il comprend en outre
un moyen d'acquisition (60) configuré pour acquérir la caractéristique optique de la lentille sur la base de l'image de motif d'indice capturée par le premier élément de capture d'image et pour acquérir des informations de lentille sur la base de l'image de lentille capturée par le deuxième élément de capture d'image, les informations de lentille étant différente de la caractéristique optique de la lentille.

2. Dispositif de mesure de lentille selon la revendication 1, dans lequel
la première source de lumière (41a) est utilisée en commun comme la deuxième source de lumière (41b), et
le dispositif de mesure de lentille (40) comprend un moyen de commande d'irradiation configuré pour commuter l'irradiation du premier flux lumineux par la première source de lumière (41b) et l'irradiation du deuxième flux lumineux par la deuxième source de lumière (41b).

3. Dispositif de mesure de lentille selon la revendication 1 ou 2,
dans lequel un film mince est formé sur un élément de base (44c) de la plaque d'indice (44) par traitement de revêtement pour former au moins l'une de la partie de transmission de lumière (44a) et de la partie de blocage de lumière (44b).

4. Dispositif de mesure de lentille selon l'une quelconque des revendications 1 à 3,
dans lequel la partie de transmission de lumière (44a) a une pluralité de points de transmission répartis sur la plaque d'indice.

5. Dispositif de mesure de lentille selon l'une quelconque des revendications 1 à 4,
dans lequel la partie de transmission de lumière (44a) est formée suivant un motif en forme de grille.
